# EUROPÄISCHE PATENTSCHRIFT

(11) **EP 2 464 839 B1**
(45) Veröffentlichungstag und Bekanntmachung des Hinweises auf die Patenterteilung: **04.03.2015**
(21) Anmeldenummer: 10728176.8
(22) Anmeldetag: 22.06.2010
(51) Int. Cl.: F01N 5/02, F02G 5/02, F02B 39/08, F02B 33/34, F01P 3/12, F01P 7/16, F01K 23/06, F01K 9/00

(54) **VORRICHTUNG ZUR NUTZUNG VON ABWÄRME**
DEVICE FOR UTILIZING WASTE HEAT
DISPOSITIF D'UTILISATION DE CHALEUR DISSIPEE

(30) Priorität: 12.08.2009 DE 102009028467
(43) Veröffentlichungstag der Anmeldung: 20.06.2012
(73) Patentinhaber: Robert Bosch GmbH, 70442 Stuttgart (DE)
(72) Erfinder: STEGMAIER, Juergen, 71638 Ludwigsburg (DE); CICHON, Martin, 70499 Stuttgart (DE); SCHMITT, Manfred, 64646 Heppenheim (DE); SCHMIDT, Achim, 71706 Markgroeningen (DE)
(86) Internationale Anmeldenummer: PCT/EP2010/058774
(87) Internationale Veröffentlichungsnummer: WO 2011/018263

(56) Entgegenhaltungen:
- EP-A1- 0 645 272
- DD-A1- 96 753
- DE-A1-102006 057 247
- DE-A1-102007 061 032
- FR-A1- 2 510 183
- JP-A- 2009 167 994

## Beschreibung

### Stand der Technik

DE 10 2006 057 247 A1 bezieht sich auf eine Aufladeeinrichtung, bei der über einen Dampfkreis thermische Energie aus dem Abgas einer Verbrennungskraftmaschine entnommen wird und durch eine Turbine teilweise in mechanische und elektrische Energie umgewandelt wird. Nicht genutzte Abwärme wird durch einen separaten Kondensator an die Umgebung abgegeben. Eine Aufladeeinrichtung dient insbesondere zur Aufladung einer Verbrennungskraftmaschine. In dem Abgastrakt befindet sich mindestens ein Abgaswärmetauscher eines Kreislaufes eines Arbeitsmediums. Dem mindestens einen Abgaswärmetauscher ist ein Förderaggregat im Kreislauf des Arbeitsmediums vorgeschaltet. Der Kreislauf des Arbeitsmediums enthält mindestens einen Turbinenteil, über den mindestens ein im Ansaugtrakt der Verbrennungskraftmaschine angeordnete Verdichterteil angetrieben ist.

Aus der Zeitschrift "Auto Motor und Sport", Band 10, Seite 26/2005 ist eine Veröffentlichung bekannt "BMW-Vierzylinder nutzt Abwärme für Leistungssteigerung - Motor mit Turbine". Gemäß dieser Veröffentlichung wandelt eine Verbrennungskraftmaschine etwa zwei Drittel der im Kraftstoff enthaltenen Energie in Abwärme um, die entweder vom Kühlsystem der Verbrennungskraftmaschine aufgenommen oder durch Abgastrakt der Verbrennungskraftmaschine abgeführt wird. Die bisher ungenutzte Abwärme kann bei Verbrennungskraftmaschinen zur Erhöhung des Wirkungsgrades um bis zu 15 % genutzt werden. Dazu wird ein 1,8 Liter-Vierzylindermotor mit einer zweistufig ausgelegten Dampfturbine gekoppelt, welche auf die Kurbelwelle des 1,8 Liter-Vierzylindermotors wirkt. Der Heißdampf wird durch Wärmetauscher erzeugt, die in der Nähe des Auspuffes im Abgastrakt der Verbrennungskraftmaschine untergebracht sind. Mittels eines Wasserkreislaufes kann aus dem Kühlkreislauf der Verbrennungskraftmaschine Kühlfluid abgezweigt werden. Durch den Antrieb der Kurbelwelle können entweder die Leistung und das Drehmoment gesteigert oder der spezifische Kraftverbrauch signifikant gesenkt werden. Weitere Vorrichtungen zur Nutzung von Abwärme eines Verbrennungskraftmaschine sind in der JP 2009 167994 A und DE 10 2007 061 032 A1 gezeigt.

### Offenbarung der Erfindung

Erfindungsgemäß wird, einer Vorrichtung zur Nutzung von Abwärme, vorgeschlagen wie im Anspruch 1 dargestellt ist.

Es ergeben sich folgende Vorteile:

Im betriebswarmen Zustand der Verbrennungskraftmaschine ergibt sich durch diese Lösung im Koppelwärmetauscher (Kondensator) des Dampfkreislaufes das jeweils niedrigst verfügbare Temperaturniveau. Die Nutzung der Abwärme der Verbrennungskraftmaschine lässt sich zur Warmlaufphasenverkürzung der Verbrennungskraftmaschine nutzen. Darüber hinaus besteht die Möglichkeit, die Abwärme der Verbrennungskraftmaschine zur Beheizung des Innenraumes des Fahrzeugs zu nutzen, was insbesondere bei niedriger Motorlast erfolgt. Ferner kann die Auskühlung einer Verbrennungskraftmaschine vermindert werden. Die Temperaturregelung der Verbrennungskraftmaschine wird auch bei Verwendung eines üblicherweise eingesetzten Dehnstoffthermostats nicht verfälscht Des Weiteren zeichnet sich die erfindungsgemäß vorgeschlagene Lösung dadurch aus, dass es keines zusätzlichen Kühlers für einen Niedertemperatur-Kühlkreislaufes bedarf. Dies wäre durch einen separaten Kühlkreislauf für den Koppelwärmetauscher (Kondensator) realisierbar, der aber eingespart werden kann, wodurch sich eine Gewichtsersparnis und eine Bauraumersparnis erreichen lässt. Des Weiteren werden auch negative Effekte auf den Luftwiderstandsbeiwert, die sich andernfalls ergeben könnten, vermieden.

Der erfindungsgemäß vorgeschlagenen Lösung folgend, wird während der Warmlaufphase der Verbrennungskraftmaschine die Abwärme des Dampfkreislaufes zur Warmlaufbeschleunigung über einen Koppelwärmetauscher in einen ersten Kreislauf des Motorkühlsystems eingekoppelt, um den Verbrauch der Verbrennungskraftmaschine zu minimieren. Bei dem Koppelwärmetauscher handelt es sich insbesondere um einen vom Kühlfluid der Verbrennungskraftmaschine durchströmten Kondensator. Nach Abschluss der Warmlaufphase der Verbrennungskraftmaschine, wird der Rücklauf des Kondensators durch ein zusätzliches Ventil vor den Kühlereingang eingespeist, um die Leistung im Dampfkreislauf zu erhöhen, der ebenfalls durch den Koppelwärmetauscher geführt ist. Sinkt die Motoraustrittstemperatur ϑ_{VKM,A} im Betrieb unter eine vorgebbare Solltemperatur ab, so wird ein Umschaltventil U wieder auf den ersten Kreislauf zurückgeschaltet, um die Abwärme des Dampfkreislaufes zur Beheizung des Innenraumes des Kraftfahrzeuges bzw. zur Verhinderung der Auskühlung der Verbrennungskraftmaschine zu nutzen. Sowohl ein Thermostatventil als auch ein Kondensatorventil werden hierbei durch die Temperatur der Verbrennungskraftmaschine gesteuert. Zu Vereinfachung der Lösung können beide Ventile, d.h. das Thermostatventil als auch das Kondensatorventil bei derselben Temperatur verstellt werden und in einer weiteren möglichen Vereinfachung kann die Verstellung beider Ventile durch ein und desselben Aktor vorgenommen werden.

Die Einspeisung des Rücklaufs vom Koppelwärmetauscher während der Warmlaufphase bzw. im Zuheizmodus für den Innenraum des Kraftfahrzeuges wird derart durchgeführt werden, dass die Temperaturerfassung für die Motortemperaturregelung nicht beeinflusst wird. Der Rücklauf des Koppelwärmetauschers erfolgt bevorzugt nach dem Thermostatventil. Das gegebenenfalls zusätzlich vorgesehene Umschaltventil im Rücklauf des Koppelwärmetauschers kann zur Vereinfachung entfallen, wenn auf die Beschleunigung der Warmlaufphase verzichtet wird. In diesem Falle kann der Rücklauf des Koppelwärmetauschers direkt am Kühlereingang angeschlossen werden. Zur Verringerung der thermischen Belastung sollte das Förderaggregat im relativ kühlen Vorlauf des Koppelwärmetauschers platziert werden.

### Kurze Beschreibung der Zeichnung

Anhand der Zeichnung wird die Erfindung nachstehend eingehender beschrieben.

Die einzige Figur zeigt das Verschaltungsschema der Verbrennungskraftmaschine mit Aufladeeinrichtung, Dampfkreis sowie einem Kühlkreis und einem erweiterten Kühlkreis.

Im einzelnen geht aus der Darstellung gemäß der Zeichnung hervor, dass eine Verbrennungskraftmaschine 10 einen Motorblock 12 umfasst. Auf dem Motorblock 12 befindet sich ein Zylinderkopf 14, am Motorblock im Bereich der in der Zeichnung nicht dargestellten Kurbelwelle ist ein Starter/Generator 16 angeflanscht. Die Verbrennungskraftmaschine 10 umfasst innerhalb eines Abgastraktes 20 einen Abgaskatalysator 18, wobei im Abgastrakt 20 in einem Zweig ein Wärmetauscher 26 ausgebildet ist. Der Wärmetauscher 26 ist Teil eines Kreislaufes 24 für ein Arbeitsmedium, bei dem es sich der erfindungsgemäß vorgeschlagenen Lösung folgend, insbesondere um einen Dampfkreis handelt. Neben dem Wärmetauscher 26 umfasst der Kreislauf 24 eine Vorrichtung zur Abwärmenutzung, die eine Expansionsmaschine 28 und eine Pumpe 30 umfasst. Des Weiteren durchströmt das Arbeitsmedium innerhalb des Kreislaufes 24, d.h. des Dampfes im Dampfkreis 24 einen Koppelwärmetauscher 40, d.h. einen Kondensator. Im Koppelwärmetauscher 40 wird das Arbeitsmedium des Kreislaufes 24, d.h. der Dampf abgekühlt und gibt seine Wärme innerhalb des Koppelwärmetauschers 40 an das Kühlmedium der Verbrennungskraftmaschine 10 ab. Ausgangsseitig verlässt das Arbeitsmedium, d.h. Kondensat den Koppelwärmetauscher 40 und strömt der Pumpe 30 der Vorrichtung zur Abwärmenutzung zu. Über die Expansionsmaschine 28 der Vorrichtung zur Abwärmenutzung wird neben der Pumpe 30 ein Generator 36 angetrieben, über den seinerseits eine Batterie 38 aufgeladen werden kann. Zwischen dem Generator 36 und der Batterie 38 zweigt eine Anschlussleitung 86 ab, über welcher der Starter 16, der im Generatormodus betrieben werden kann, mit einer Spannungsquelle verbunden ist.

Aus der Zeichnung geht ferner hervor, dass die Expansionsmaschine 28 der Vorrichtung zur Abwärmenutzung 28, 30 eine Kompressionsmaschine 34 antreibt, der ein Luftfilter 46 vorgeschaltet ist.

Aus der schematischen Wiedergabe der erfindungsgemäß vorgeschlagenen Lösung gemäß der Zeichnung geht des Weiteren hervor, dass der Koppelwärmetauscher 40 einen Vorlauf 42 sowie einen Rücklauf 44 aufweist. Der Koppelwärmetauscher 40 wird einerseits durch das Arbeitsmedium des Kreislaufes 24, d.h. den Dampf innerhalb des Kreislaufes 24 durchströmt, der innerhalb des Koppelwärmetauschers 40 seine Wärme an das Kühlmedium abgibt und andererseits vom Kühlmedium, welches innerhalb eines Koppel-Wärmetauscher-Kreises 66 befördert wird. Zur Förderung des Kühlmediums dient ein Förderaggregat 64, was bevorzugt als Pumpe ausgebildet ist und im "kalten" Vorlauf 42 in Bezug auf den Koppelwärmetauscher 40 liegt.

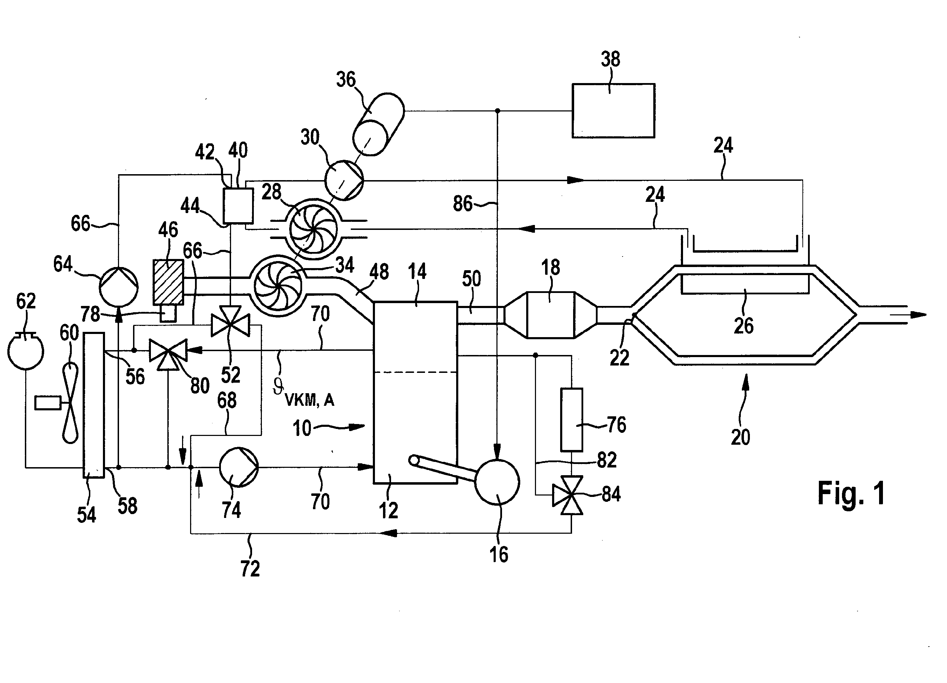

Aus der schematischen Darstellung gemäß Figur 1 geht hervor, dass die Verbrennungskraftmaschine 10 über einen Kühler 54 verfügt. In konventioneller Weise ist dem Kühler 54 ein im Allgemeinen elektrisch angetriebenes Lüfterrad 60 zugeordnet, ebenso wie ein durch Bezugszeichen 62 angedeutetes Ausgleichsgefäß, welches als Expansionsraum für das Kühlmedium dient. Ein Kühlereingang des Kühlers 54 ist mit Bezugzeichen 56 bezeichnet, ein Kühlerausgang mit Bezugszeichen 58 identifiziert. Der Koppel-Wärmetauscher-Kreis 66 ist am Kühlerausgang 58 angeschlossen. Von dort erstreckt sich der Koppel-Wärmetauscher-Kreis 66 zum Förderaggregat 64 im Vorlauf 42. Nach Passage des Koppelwärmetauschers 40 strömt erwärmtes Kühlmedium über den Rücklauf 44 einem Umschaltventil 52 zu. Bei dem Umschaltventil 52 handelt es sich insbesondere um ein 3-Wege-Ventil. Je nach Ansteuerung des Umschaltventiles 52 kann der den Koppelwärmetauscher 40 verlassende Rücklauf 44 einerseits stromab eines Thermostatventiles 80 vor dem Kühlereingang 56 in den Kühler 54 eingespeist und dort abgekühlt werden; andererseits - je nach Ansteuerung des bevorzugt als 3-Wege-Ventil ausgebildeten zusätzlichen Ventiles 52 - derart, dass im Koppelwärmetauscher 40 erwärmtes Kühlmedium über eine Einspeisung 68 vor einer Kühlmittelpumpe 74, welche sich im ersten Kreislauf 70 der Verbrennungskraftmaschine 10 befindet, eingespeist wird.

Der erste Kreislauf 70 an der Verbrennungskraftmaschine 10 erstreckt sich ausgehend von der Einspeisung 68 zur Kühlmittelpumpe 74. Von dort strömt das Kühlmedium dem Motorblock 12 bzw. dem Zylinderkopf 14 der Verbrennungskraftmaschine 10 zu. Je nach Beschaltung eines Heizungsventiles 84 bzw. des Thermostatventiles 80, verlässt das erwärmte Kühlmedium den Zylinderkopf 14 der Verbrennungskraftmaschine und strömt dem Thermostatventil 80 zu. Je nach Austrittstemperatur des Kühlmediums ϑ_{VKM, Ausgang} werden sowohl das Thermostatventil 80 als auch das Umschaltventil 52 gesteuert. Unterschreitet die Austrittstemperatur des Kühlmediums ϑ_{VKM, Ausgang} im Betrieb der Verbrennungskraftmaschine 10 die Solltemperatur, so wird das Umschaltventil 52 derart geschaltet, dass das erwärmte Kühlmedium über die Einspeisung 68 dem ersten Kreislauf 70 der Verbrennungskraftmaschine zuströmt und nicht durch den Kühler 54. Der Zweig des Rücklaufes 44, der sich hinter dem Thermostatventil 80 erstreckt und zum Kühlereingang 56 des Kühlers 54 erstreckt, ist in diesem Falle geschlossen.

Neben dem bereits erwähnten ersten Kreislauf 70 der Verbrennungskraftmaschine 10 ist der erfindungsgemäß vorgeschlagenen Lösung folgend, auch ein Heizkreislauf 72 der Verbrennungskraftmaschine 10 zugeordnet. Dieser Heizkreislauf 72 umfasst eine Innenraumzusatzheizung 76, welche mittels eines Heizungsventils 84, welches ebenfalls Teil des Heizkreislaufes 72 ist, gesteuert wird. Das Heizungsventil 84 ist ebenfalls bevorzugt als 3-Wege-Ventil ausgebildet, und öffnet oder verschließt einen Bypass 82, der sich im Heizkreislauf 72 parallel zum Wärmetauscher der Zusatzheizung 76 erstreckt. Der Heizkreislauf 72 mündet in die Leitung des Kühlmediums, die sich vom Kühlausgang 58 zur Kühlmittelpumpe 74 erstreckt.

In vorteilhafter Weise werden sowohl das Umschaltventil 52 als auch das Thermostatventil 80 über einen gemeinsamen Aktor 78 gesteuert und bevorzugt sind beide Ventile 52, 80 derart ausgestaltet, dass diese bei ein und derselben Temperatur verstellt werden.

Um die Motortemperaturregelung nicht zu beeinflussen, ist die Rückleitung des Rücklaufs 44 des Koppelwärmetauschers 40, d.h. des Kondensators so gestaltet, dass die Temperaturerfassung für die Motortemperaturregelung nicht beeinflusst wird. Bei einem üblicherweise eingesetzten als Dehnstoffthermostat ausgebildeten Thermostatventil 80 erfolgt dies derart, dass der Rücklauf 44 stromab des Thermostatventils 80 eingespeist wird.

Mit der erfindungsgemäß vorgeschlagenen Lösung kann das Abgas der Verbrennungskraftmaschine 10, welches am Auslass 50 des Zylinderkopfes 14 über einen in der Zeichnung nicht dargestellten Abgaskrümmer in den Abgastrakt 20 gelangt, innerhalb des Kreislaufes 24, insbesondere innerhalb des Koppelwärmetauschers 40 abgekühlt werden. Damit wird dem Abgas der Verbrennungskraftmaschine vorhandene Abwärme durch den Kreislauf 24 über das Kühlsystem, d.h. den Kühler 54, den ersten Kreislauf 70 bzw. den Heizkreis 72 abgeführt. Dadurch kann ein zusätzlicher Aufwand für eine separates Kühlsystem eingespart werden. Bei der erfindungsgemäß vorgeschlagenen Lösung wird insbesondere ein möglichst niedriges Temperaturniveau im Koppelwärmetauscher 40 erreicht, wodurch sich ein sehr hoher thermischer Wirkungsgrad im Kreislauf 24 des Arbeitsmediums, bevorzugt Wasserdampf einstellt.

Der erfindungsgemäß vorgeschlagenen Lösung folgend, lassen sich sowohl eine Warmlaufphase der Verbrennungskraftmaschine 10 verkürzen, als auch ein Zuheizbetriebsmodus realisieren, über welchen zum Beispiel eine zusätzliche Beheizung des Innenraumes eines Kraftfahrzeuges über eine Innenraumzusatzheizung 76 erfolgen kann. Diese Betriebsmodi werden nachstehend detaillierter erläutert.

Während der Warmlaufphase der Verbrennungskraftmaschine wird die Abwärme des Kreislaufes 24, dem Koppelwärmetauscher 40 an das Kühlmedium, welches im Koppel-Wärmetauscher-Kreislauf 66 zirkuliert, abgegeben. Der Koppelwärmetauscher 40 wird einerseits durch das Arbeitsmedium des Kreislaufes 24, d.h. Dampf durchströmt und andererseits vom Kühlmittel der Verbrennungskraftmaschine 10, welches über das Förderaggregat 64 im kalten Vorlauf 42 zum Koppelwärmetauscher 40 geführt wird. Während der Warmlaufphase der Verbrennungskraftmaschine 10 erfolgt die Verbindung des Rücklaufes 44 bei entsprechender Beschaltung des Umschaltventiles 52 über die Einspeisung 68 in den ersten Kreislauf 70 der Verbrennungskraftmaschine 10. Das erwärmte Kühlmedium wird durch die Kühlmittelpumpe 74 in den Motorblock 12 der Verbrennungskraftmaschine sowie deren Zylinderkopf 14 geleitet, wodurch der Kraftstoffverbrauch der Verbrennungskraftmaschine 10 während der Warmlaufphase reduziert wird. Mithin kann aus dem Kreislauf 24 ausgekoppelte Abwärme zur Verkürzung der Warmlaufphase der Verbrennungskraftmaschine 10 genutzt werden. In diesem Falle - während der Warmlaufphase - bleibt je nach Fahrerwunsch das Heizungsventil 84 geschlossen, so dass das Kühlmittel im ersten Kreislauf 70 zirkuliert.

Nach Abschluss der Warmlaufphase der Verbrennungskraftmaschine 10 wird abhängig von der Austrittstemperatur des Kühlmediums t9vₖₘ, Ausgang das Umschaltventil 52 derart angesteuert, dass der Rücklauf 44 des Koppelwärmetauschers 40 nunmehr nicht über die Einspeisung 68 geleitet ist, sondern hinter dem Thermostatventil 80 vor den Kühlereingang 56 des Kühlers 54 in diesen eingespeist wird. Demnach wird das im Koppelwärmetauscher 40 über den Rücklauf 44 strömende erwärmte Kühlmedium über den Kühler 54 der Verbrennungskraftmaschine 10 geleitet und dort abgekühlt. Somit lässt sich die Leistung im Kreislauf 24, d.h. im Dampfkreis erhöhen.

Sinkt die Motoraustrittstemperatur ϑ_{VKM, Ausgang} der Verbrennungskraftmaschine 10 im Betrieb unter eine Solltemperatur ab, so wird das Umschaltventil 52 wieder auf den ersten Kreislauf 70 zurückgeschaltet, so dass der Rücklauf 44 über die Einspeisung 68 unmittelbar vor der Kühlmittelpumpe 74 in den ersten Kreislauf 70 eingespeist werden kann. Somit kann die Abwärme des Dampfkreises zur Motorzuheizung einerseits, und andererseits auch im Rahmen des Heizkreislaufes 72 zur Innenraumheizung bei Durchströmung der Innenraumzusatzheizung 76 genutzt werden. Dies hängt davon ab, in welcher Stellung sich das Heizventil 84, welches im Heizkreis 72 vorgesehen ist, befindet. In vorteilhafter Weise werden sowohl das Thermostatventil 80 als auch das Umschaltventil 52 abhängig von der Motortemperatur, oder alternativ abhängig von der Austrittstemperatur des Kühlmediums ϑ_{VKM, Ausgang} gesteuert. In einer vorteilhaften Ausführungsvariante können die beiden Ventile, d.h. das Umschaltventil 52 und das Thermostatventil 80, bei dem es sich um ein konventionell eingesetztes Dehnstoffthermostat handeln kann, bei ein und derselben Temperatur verstellt werden. In einer weiteren vereinfachten Ausgestaltung kann die Verstellung des Umschaltventiles 52 sowie des Thermostatventiles 80 durch einen gemeinsamen Aktor 78 vorgenommen werden.

Um die Motortemperaturregelung nicht zu beeinträchtigen, erfolgt die Einspeisung des Rücklaufes 44 ausgangsseitig des Koppelwärmetauschers 40 sowohl in der Warmlaufphase als auch im Rahmen des Zusatzheizmodus' derart, dass die Temperaturerfassung für die Motortemperaturregelung nicht beeinflusst wird, insbesondere derart, dass die Einspeisung des Rücklaufes 44 des Koppelwärmetauschers 40 stromab des Thermostatventiles 80 vorgenommen wird.

Des Weiteren sei erwähnt, dass zur Verringerung der thermischen Belastung das Förderaggregat 64 zur Umwälzung des Kühlmediums im Koppel-Wärmetauscher-Kreis 66, bevorzugt im kalten Vorlauf 42 des Koppelwärmetauschers 40 platziert wird.

In vorteilhafter Weise lässt sich mit der erfindungsgemäß vorgeschlagenen Lösung das niedrigst verfügbare Temperaturniveau in jedweder Betriebsweise der Verbrennungskraftmaschine 10 innerhalb des Koppelwärmetauschers 40 nutzen.

## Patentansprüche

1. Vorrichtung zur Nutzung von Abwärme einer Verbrennungskraftmaschine (10) in deren Abgastrakt (20) ein Wärmetauscher (26) eines Kreislaufes (24) eines Arbeitsmediums vorgesehen ist, dem eine Pumpe (30) vorgeschaltet ist, wobei der Kreislauf (24) eine Expansionsmaschine (28) umfasst, wobei in dem Kreislauf (24) des Arbeitsmediums ein Koppelwärmetauscher (40) angeordnet ist, der vom Arbeitsmedium des Kreislaufes (24) und von einem Kühlmedium, welches innerhalb eines Koppel-Wärmetauscher-Kreises (66) befördert wird, durchströmt ist, wobei ein Umschaltventil (52) im Koppel-Wärmetauscher-Kreis (66) angeordnet ist, wobei in einer ersten Position des Umschaltventils (52) der Koppel-Wärmetauscher-Kreis (66) mit einem ersten Kreislauf (70), welcher den Motorblock (12) und/oder den Zylinderkopf (14) der Verbrennungskraftmaschine (10) umfasst, verbunden ist, **dadurch gekennzeichnet, dass** in einer weitere Position des Umschaltventils (52) der Koppel-Wärmetauscher-Kreis (66) ausschließlich mit einem Kühlereingang (56) und einem Kühlerausgang (58) eines Kühlers (54) verbunden ist..

2. Vorrichtung nach Anspruch 1, **dadurch gekennzeichnet, dass** das Umschaltventil (52) als 3-Wege-Ventil ausgebildet ist.

3. Vorrichtung gemäß einem der vorherigen Ansprüche, **dadurch gekennzeichnet, dass** ein Förderaggregat (64) im Vorlauf zum Koppelwärmetauscher (40) angeordnet ist.

4. Verfahren zur Nutzung von Abwärme einer Verbrennungskraftmaschine (10) gemäß einem der vorherigen Ansprüche, **dadurch gekennzeichnet, dass** in der Warmlaufphase der Verbrennungskraftmaschine (10) der Koppel-Wärmetauscher-Kreis (66) mit dem ersten Kreislauf (70) der Verbrennungskraftmaschine (10) verbunden ist.

5. Verfahren nach einem der vorherigen Ansprüche, **dadurch gekennzeichnet, dass** bei betriebswarmer Verbrennungskraftmaschine (10) der Koppel-Wärmetauscher-Kreis (66) mit dem Kühlereingang (56) und Kühlerausgang (58) des Kühlers (54) verbunden ist.

6. Verfahren nach einem der Ansprüche 4 oder 5, **dadurch gekennzeichnet, dass** das Umschaltventil (52) abhängig von der Austrittstemperatur des Kühlmediums ϑ_{VKM, Ausgang} der Verbrennungskraftmaschine (10) gesteuert wird.

## Claims

1. Apparatus for utilizing waste heat of an internal combustion engine (10), in the exhaust gas system (20) of which a heat exchanger (26) of a circuit (24) of a working medium is provided, a pump (30) being connected upstream of the said heat exchanger (26), the circuit (24) comprising an expansion machine (28), a coupling heat exchanger (40) being arranged in the circuit (24) of the working medium, which coupling heat exchanger (40) is flowed through by the working medium of the circuit (24) and by a cooling medium which is conveyed within a coupling heat exchanger circuit (66), a switchover valve (52) being arranged in the coupling heat exchanger circuit (66), the coupling heat exchanger circuit (66) being connected in a first position of the switchover valve (52) to a first circuit (70) which comprises the engine block (12) and/or the cylinder head (14) of the internal combustion engine (10), **characterized in that**, in a further position of the switchover valve (52), the coupling heat exchanger circuit (66) is connected exclusively to a radiator inlet (56) and a radiator outlet (58) of a radiator (54).

2. Apparatus according to Claim 1, **characterized in that** the switchover valve (52) is configured as a 3-way valve.

3. Apparatus according to either of the preceding claims, **characterized in that** a delivery unit (64) is arranged in the feed line to the coupling heat exchanger (40).

4. Method for utilizing waste heat of an internal combustion engine (10) according to one of the preceding claims, **characterized in that**, in the warm-up phase of the internal combustion engine (10), the coupling heat exchanger (66) is connected to the first circuit (70) of the internal combustion engine (10).

5. Method according to one of the preceding claims, **characterized in that**, when the internal combustion engine (10) is at operating temperature, the coupling heat exchanger circuit (66) is connected to the radiator inlet (56) and radiator outlet (58) of the radiator (54).

6. Method according to either of Claims 4 and 5, **characterized in that** the switchover valve (52) is controlled depending on the outlet temperature of the cooling medium θ_{engine,outlet} of the internal combustion engine (10).

## Revendications

1. Dispositif pour l'utilisation de la chaleur dissipée d'un moteur à combustion interne (10) dans le système de gaz d'échappement (20) duquel est prévu un échangeur de chaleur (26) d'un circuit (24) d'un fluide de travail, en amont duquel est montée une pompe (30), le circuit (24) comprenant une machine à expansion (28), un échangeur de chaleur de couplage (40) étant disposé dans le circuit (24) de fluide de travail, lequel est parcouru par le fluide de travail du circuit (24) et par un fluide de refroidissement qui est transporté à l'intérieur d'un circuit d'échangeur de chaleur de couplage (66), une soupape d'inversion (52) étant disposée dans le circuit d'échangeur de chaleur de couplage (66), le circuit d'échangeur de chaleur de couplage (66), dans une première position de la soupape d'inversion (52), étant connecté à un premier circuit (70) qui comprend le bloc-moteur (12) et/ou la culasse (14) du moteur à combustion interne (10), **caractérisé en ce que** dans une autre position de la soupape d'inversion (52), le circuit d'échangeur de chaleur de couplage (66) est uniquement connecté à une entrée de radiateur (56) et à une sortie de radiateur (58) d'un radiateur (54).

2. Dispositif selon la revendication 1, **caractérisé en ce que** la soupape d'inversion (52) est réalisée sous forme de soupape à trois voies.

3. Dispositif selon l'une quelconque des revendications précédentes, **caractérisé en ce qu'**une unité de refoulement (64) est disposée dans la section allant à l'échangeur de chaleur de couplage (40).

4. Procédé pour l'utilisation de la chaleur dissipée d'un moteur à combustion interne (10) selon l'une quelconque des revendications précédentes, **caractérisé en ce que** dans la phase de mise en température du moteur à combustion interne (10), le circuit d'échangeur de chaleur de couplage (66) est connecté au premier circuit (70) du moteur à combustion interne (10).

5. Procédé selon l'une quelconque des revendications précédentes, **caractérisé en ce que** lorsque le moteur à combustion interne (10) fonctionne à chaud, le circuit d'échangeur de chaleur de couplage (66) est connecté à l'entrée de radiateur (56) et à la sortie de radiateur (58) du radiateur (54).

6. Procédé selon l'une quelconque des revendications 4 ou 5, **caractérisé en ce que** la soupape d'inversion (52) est commandée en fonction de la température de sortie du fluide de refroidissement ϑ_{VKM, Sortie} du moteur à combustion interne (10).
